# EUROPEAN PATENT APPLICATION

(11) **EP 2 254 082 A1**
(43) Date of publication of application: **24.11.2010**
(21) Application number: 10002899.2
(22) Date of filing: 18.03.2010
(51) Int. Cl.: G06Q 10/00, G06Q 50/00

(54) **Transportation schedule planning support system and transportation schedule planning support method**

(30) Priority: 19.05.2009 JP 2009121189
(71) Applicant: Hitachi, Ltd., Chiyoda-ku Tokyo 100-8280 (JP)
(72) Inventor: Nakamura, Isao, Tokyo 100-8220 (JP); Tateishi, Jun, Tokyo 100-8220 (JP); Ikezawa, Katsunari, Tokyo 100-8220 (JP); Kurata, Takeshi, Tokyo 100-8220 (JP); Nemoto, Yasuhiro, Tokyo 100-8220 (JP); Hanawa, Shinichirou, Tokyo 100-8220 (JP)
(74) Representative: Strehl Schübel-Hopf & Partner

(57) **Abstract**

A transportation schedule planning support system receives an order of one or more types of products which requires a use-by date control, and transports the products from one or more stock-carrying bases to one or more delivery destinations. In the system, a user previously registers a transportation route candidate from a stock-carrying base to each delivery destination adoptable as a solution, as a base group. A necessary use-by date for a product to be delivered next is determined based on an actual delivery to each delivery destination. The number of vehicles allocatable to a transportation at each base according to a vehicle type, and a vehicle type not used in each base group are added to a restriction condition. A mixed integer programming is applied using an expected obtainable profit obtained by delivering each product as an objective function.

## Description

### BACKGROUND OF THE INVENTION

### 1. Field of the Invention

The present invention relates to a system of supporting a transportation schedule planning and a method of supporting a transportation schedule planning.

### 2. Description of the Related Art

In transporting a product having a use-by date such as a best before date, a supply source or a supply destination of the product needs to be determined in view of the use-by date. Japanese Laid-Open Patent Application, Publication No. 2008-114960 discloses a technique of determining a transportation route of a product, if a plurality of supply sources and a plurality of supply destinations are present. The transportation route minimizes a sum of a transportation cost, a cost of penalty for stockout, and a cost of penalty for excess stock, while placing a restriction in which a use-by date of a product delivered to a supply destination is prevent from predating using a linear programming.

Japanese Laid-Open Patent Application, Publication No. 2004-217340 discloses a method of creating a transportation schedule for each vehicle so as to minimize a transportation cost, if a plurality of vehicles are used for visiting clients in a given area.

### SUMMARY OF THE INVENTION

Freshness of a product such as food, medicine, and cosmetics strongly affects its quality. Thus, a use-by date of such a product, including a best before date and an expiration date which is traceable to the time of production and is a measure of indicating freshness is controlled. In distributing such a product, if a currently-delivered product having an older use-by date than that of a previously-delivered product arrives at a delivery destination base, the product with the older use-by date is refused to be received there in some cases, because an added value of the use-by date has become important. In light of the situation, there is a problem that a use-by date of each product needs to be considered according to a delivery destination base.

Further, in order to reduce a transportation cost, it is necessary to transport a large number of products at one time by increasing a loading ratio of each vehicle. However, some possible restrictions exist in realizing this. For example, a vehicle is intended to deliver a consolidated loading of products via a plurality of bases, but there may be a restriction of a vehicle size physically permitted to enter a given base. Or, a travel of a vehicle via the plurality of bases may not be permitted by contract. Additionally, not only a base at which stock is controlled but also a stock-carrying transit base at which stock is not controlled may be used for transshipment. Thus, there is a problem that a transportation schedule as efficient as possible needs to be planned, based on various restrictions or conditions.

In light of the above mentioned, the present invention has been made in an attempt to support a planning of a further efficient transportation schedule, while a use-by date of each product according to a delivery destination as well as a restriction on a transportation according to a base are taken into account.

A transportation schedule planning support system receives an order of one or more types of products which requires a use-by date control, and transports the products from one or more stock-carrying bases to one or more delivery destinations. The transportation schedule planning support system includes: a base group storage part that stores a transportation route candidate from one or more stock-carrying bases to each delivery destination adoptable as a solution, as a base group; a necessary amount calculation part that determines a necessary use-by date for a product to be delivered based on an actual delivery to each delivery destination and calculates a necessary amount of the product; a restriction condition creation part that creates restriction condition concerning at least a necessary amount according to a delivery destination, a type of a product, and a necessary use-by date, the number of vehicles allocatable to a transportation at each base according to a vehicle type, and a vehicle type not used in each base group; an objective function creation part that creates an objective function for calculating an expected obtainable profit from a transportation amount of each product and from a transportation cost determined corresponding to a transportation route of each vehicle; and a transportation schedule creation part that creates a transportation schedule using the restriction condition and the objective function with a mixed integer programming.

Other features and advantages of the present invention will become more apparent from the following detailed description of the invention, when taken in conjunction with the accompanying exemplary drawings.

### BRIEF DESCRIPTION OF THE DRAWINGS

FIG. 1 is a block diagram illustrating a functional configuration example of a transportation schedule planning support system according to an embodiment of the present invention.
FIG. 2 is a diagram illustrating an example of a transportation model targeted for a transportation schedule planning according to the embodiment.
FIG. 3 is a block diagram illustrating an example of an entire configuration and a hardware configuration including a server, of the transportation schedule planning support system according to the embodiment.
FIG. 4 is a flowchart illustrating a flow of an entire processing of a transportation schedule creation procedure according to the embodiment.
FIG. 5 is a flowchart illustrating a flow of a necessary amount determination processing according to the embodiment.
FIG. 6 is a flowchart illustrating a flow of a suppliable amount determination processing according to the embodiment.
FIG. 7 is a flowchart illustrating a flow of a restriction condition creation processing according to the embodiment.
FIG. 8 is a flowchart illustrating a flow of an objective function creation processing according to the embodiment.
FIG. 9 is a diagram illustrating tables constituting order information and a data configuration example of the tables according to the embodiment.
FIG. 10 is a diagram illustrating a table constituting actual delivery information and a data configuration example of the table according to the embodiment.
FIG. 11 is a diagram illustrating tables constituting master information and a data configuration example of the tables according to the embodiment.
FIG. 12 is a diagram illustrating a table constituting base group information and a data configuration example of the table according to the embodiment.
FIG. 13 is a diagram illustrating a table constituting a base group vehicle type restriction and a data configuration example of the table according to the embodiment.
FIG. 14 is a diagram illustrating a table constituting allocatable vehicle information and a data configuration example of the table according to the embodiment.
FIG. 15 is a diagram illustrating a table constituting information on a necessary amount and a suppliable amount and a data configuration example of the table according to the embodiment.
FIG. 16 is a diagram illustrating tables constituting expected obtainable profit information and a data configuration example of the tables according to the embodiment.
FIG. 17 is a diagram illustrating a table constituting information on a transportation schedule and a data configuration example of the table according to the embodiment.
FIG 18 is a diagram illustrating a display example of a base group information input screen according to the embodiment.
FIG. 19 is a diagram illustrating a display example of a vehicle information register screen according to the embodiment.
FIG. 20 is a diagram illustrating a display example of a necessary amount input screen according to the embodiment.
FIG. 21 is a diagram illustrating a display example of a transportation schedule output display switching screen according to the embodiment.
FIG. 22 is a diagram illustrating a display example of a product-by-product transportation schedule output screen according to the embodiment.
FIG. 23 is a diagram illustrating a display example of a vehicle-by-vehicle transportation schedule output screen according to the embodiment.
FIG. 24 is a diagram illustrating a display example of a transportation schedule input screen according to the embodiment.

### DETAILED DESCRIPTION OF THE EXEMPLARY EMBODIMENT

Next is described in detail an embodiment for carrying out the present invention with reference to related drawings.

### (1) Target Transportation Model

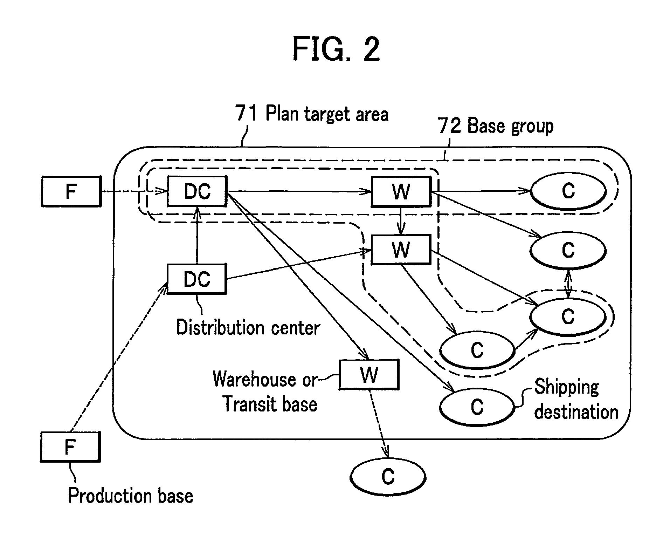

FIG. 2 shows an example of a transportation model targeted for a transportation schedule planning in a transportation schedule planning support system of the present invention. In the transportation model, a product is produced at a production base F, is first transported to a stock-controlling distribution center (to be simply referred to as a "distribution center" hereinafter) DC, and is then transported via a warehouse (or a transit base) W to finally arrive at a shipping destination C according to a demand.

In the transportation model, a transportation schedule target area 71 is a target in which the transportation schedule planning support system of the present invention plans a transportation schedule. In other words, a transportation of a product outside the transportation schedule target area 71 is not targeted for. A transportation of a product from the production base F to the distribution center DC (as indicated by a dashed arrow from F to DC of FIG. 2) is not targeted for. This is because such a transportation is carried out by a dedicated vehicle immediately after the product is produced, independently of a shipping destination C of the produced product. Thus, the distribution center DC is modeled to have a stock amount which is calculated based on already-determined receiving plan information. Another transportation by which a product is taken from the shipping destination C to the warehouse W (as indicated by a dashed arrow from the warehouse W to the shipping destination C of FIG. 2) is also excluded from the target. This is because such a transportation is arranged at the shipping destination C. In this system, the transportation model is assumed to have the warehouse W as a final delivery destination.

If a transportation is carried out in the transportation schedule target area 71 in response to an order from the shipping destination C, the number of transportation routes is in theory, is innumerable starting from the stock carrying distribution center DC or warehouse W, to the shipping destination C or the warehouse W as the final delivery destination. In order to obtain an effective transportation route as a solution within a limited time, a technique of reducing a calculation amount is required. The present invention can greatly reduce the calculation amount by previously narrowing down a theoretically innumerable number of transportation routes down to possible solution candidates. The possible solution candidates of the transportation route are herein referred to as a "base group". In FIG. 2, each area surrounded by a dashed line represents a base group 72.

An administrator of the system narrows transportation routes having every possible combination of bases down to the base groups 72. Only the narrowed-down base groups 72 are registered in the system. The narrowed-down base groups 72 are further narrowed down by excluding those not meeting a restriction on transportation. If such a restriction is placed that a consolidated loading of products to be delivered to different shipping destinations is not permitted by contract, the base group 72 meeting the restriction is newly created to have a single shipping destination and is then registered.

This means that a solution space can be narrowed down based on past experience in the system. For example, a plurality of the distribution centers DC located far away from each other are not to be included in the same base group 72. Or, a transportation between far-away bases is not to be carried out more than once.

As described above, the base group 72 is registered in the system in the present invention. This advantageously facilitates an addition or a deletion of a base or a change in a transport pattern in conformity with a client's demand.

Frozen or cooled products and the like to be managed in different temperature zones need to be separately transported on respective vehicles with different vehicle types. In this case, a transportation schedule is created according to, for example, refrigeration, cold, normal temperature, and the like.

### (2) Hardware Configuration

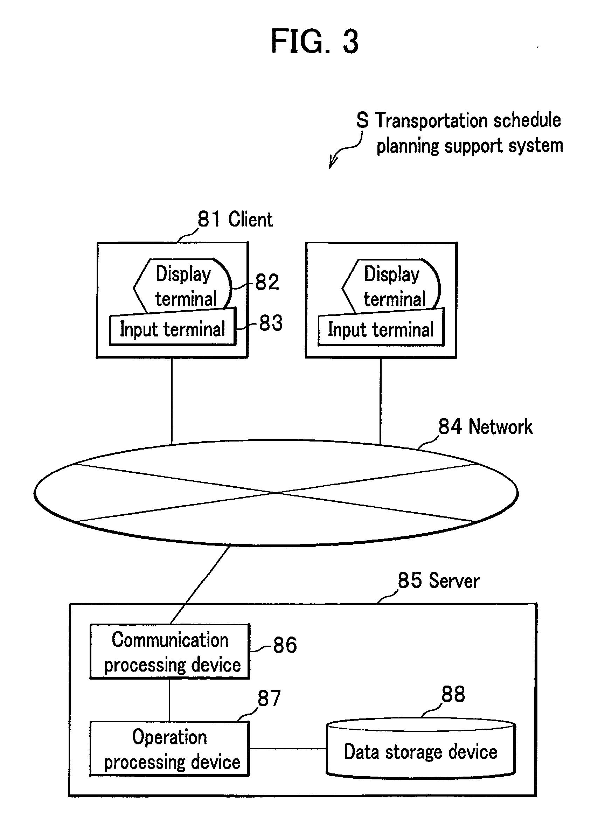

FIG. 3 shows an example of an entire configuration and a hardware configuration including a server, of a transportation schedule planning support system S. The transportation schedule planning support system S includes a server 85 coupled to a network 84 and a plurality of clients 81. A user uses the system S from the client 81.

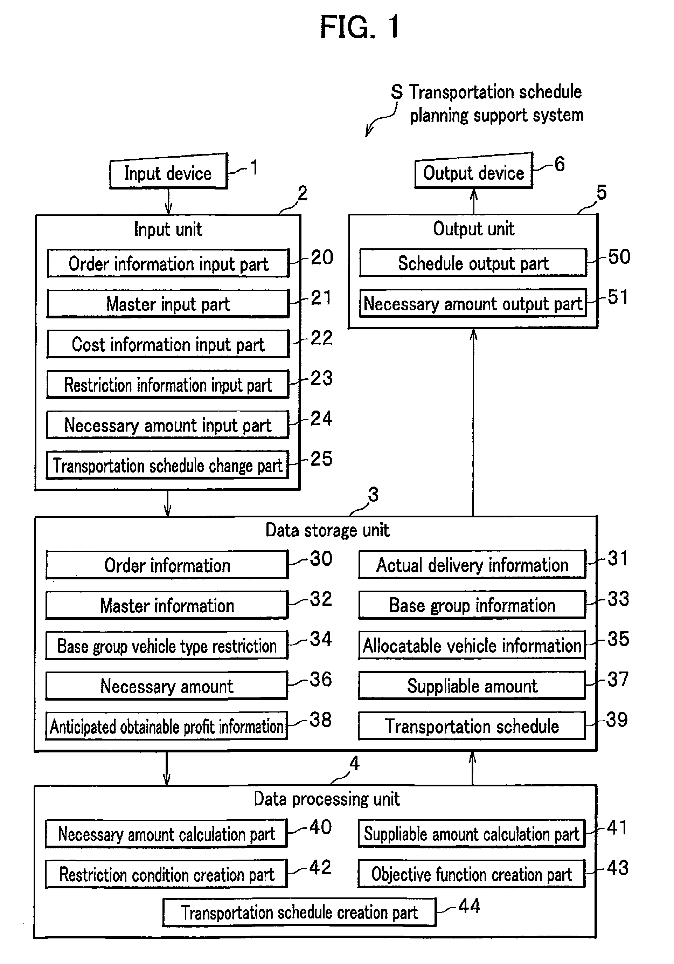

The client 81 is embodied by a personal computer including an input terminal 83 such as a mouse and a keyboard, and a display terminal 82 such as a CRT and a liquid crystal display. A storage unit not shown of the client 81 can create a file and store data therein. The input terminal 83 and the display terminal 82 correspond to the input device 1 and the output device 6 of FIG. 1, respectively, and are used for utilizing functions of the input unit 2 and the output unit 5 of FIG. 1 owned by the server 85.

The server 85 is a computer including: a communication processing device 86 for transmitting and receiving input information or output information to and from the client 81; an operation processing device 87 for executing processings performed by the input unit 2, the output unit 5, and the data processing unit 4 of FIG. 1; and a data storage device 88 for storing therein data in the data storage unit 3 of FIG. 1.

### (3) Functional Configuration

FIG. 1 shows a functional configuration example of the transportation schedule planning support system S. The transportation schedule planning support system S includes the input device 1, the input unit 2, the data storage unit 3, the data processing unit 4, the output unit 5, and the output device 6.

The input device 1 and the output device 6 exchange information with a user of the system S. Their functions are realized by the client 81 of FIG. 3. Functions of the input unit 2, the data storage unit 3, the data processing unit 4, and the output unit 5 are realized by the server 85 of FIG. 3.

The input unit 2 registers therein various information necessary for planning a transportation schedule. The input unit 2 includes an order information input part 20, a master input part 21, a cost information input part 22, a restriction information input part 23, a necessary amount input part 24, and a transportation schedule change part 25.

The order information input part 20 stores a data in a given order information file not shown, in respective tables constituting the order information 30 and the actual delivery information 31 of the data storage unit 3.

The master input part 21 stores a data in a given master file not shown, in respective tables constituting the master information 32 of the data storage unit 3. The master input part 21 also stores a data on a base group inputted from a display, in a table constituting the base group information 33 of the data storage unit 3.

The cost information input part 22 stores a data on an allocatable vehicle and an expected obtainable profit inputted from a display, in respective tables of the allocatable vehicle information 35 and the expected obtainable profit information 38 of the data storage unit 3.

The restriction information input part 23 stores a data of a base group vehicle type restriction inputted from a display, in a table constituting the base group vehicle type restriction 34 of the data storage unit 3.

The necessary amount input part 24 adds or revises a data on an already-calculated necessary amount stored in a table constituting the necessary amount 36 of the data storage unit 3, from a file or the like.

The transportation schedule change part 25 adds or revises a data on an already-created transportation schedule stored in a table constituting the transportation schedule 39 of the data storage unit 3 from a file or the like.

The data storage unit 3 stores therein various information registered by the input unit 2 and a result processed by the data processing unit 4. The data storage unit 3 stores therein, for example, the order information 30, the actual delivery information 31, the master information 32, the base group information 33, the base group vehicle type restriction 34, the allocatable vehicle information 35, a necessary amount 36, a suppliable amount 37, the expected obtainable profit information 38, and the transportation schedule 39. Data configurations of the respective information will be described later.

The data processing unit 4 includes: a necessary amount calculation part 40 for planning a transportation schedule based on various information stored in the data storage unit 3 and calculating a necessary amount according to a base, a type of a product, and a use-by date; a suppliable amount calculation part 41 for calculating a suppliable amount of a product according to a base, a type of a product, and a use-by date (which may also be simply referred to as a "suppliable amount" hereinafter); a restriction condition creation part 42 for creating a restriction condition to be satisfied by a solution restriction condition; an objective function creation part 43 for creating an objective function so as to calculate an evaluation measure of the solution; and a transportation schedule creation part 44 for creating a transportation schedule by computing a solution which maximizes the evaluation measure.

The output unit 5 outputs a result processed by the data processing unit 4 to the output device 6. The output unit 5 includes: a schedule output part 50 for outputting a transportation schedule created by the transportation schedule creation part 44; and a necessary amount output part 51 for outputting a necessary amount of a product calculated by the necessary amount calculation part 40.

### (4) Transportation Schedule Creation Method

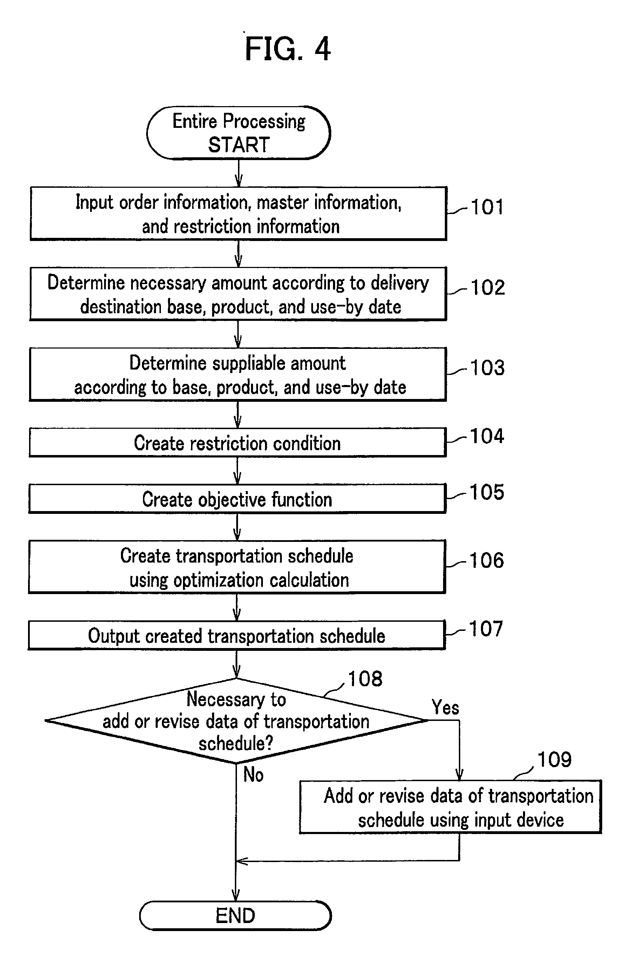

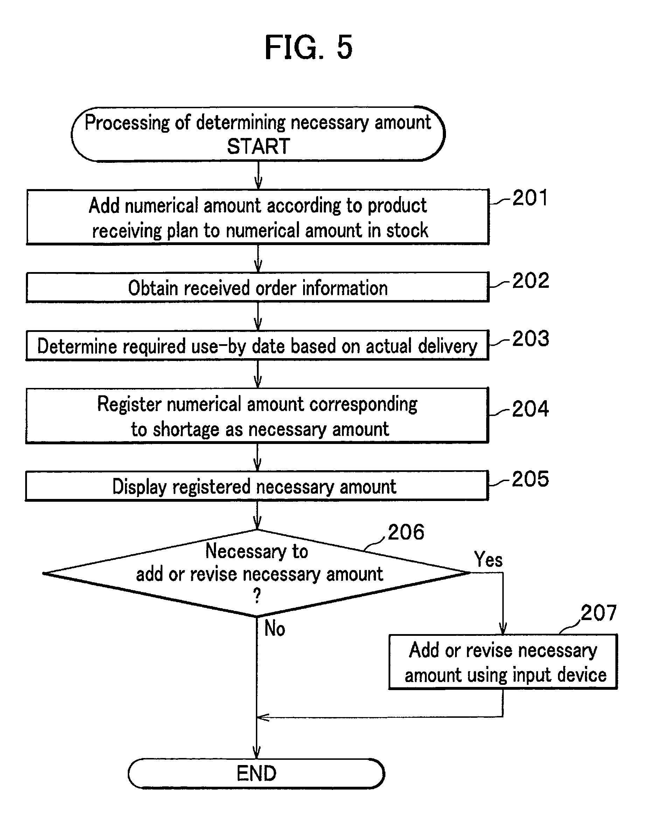

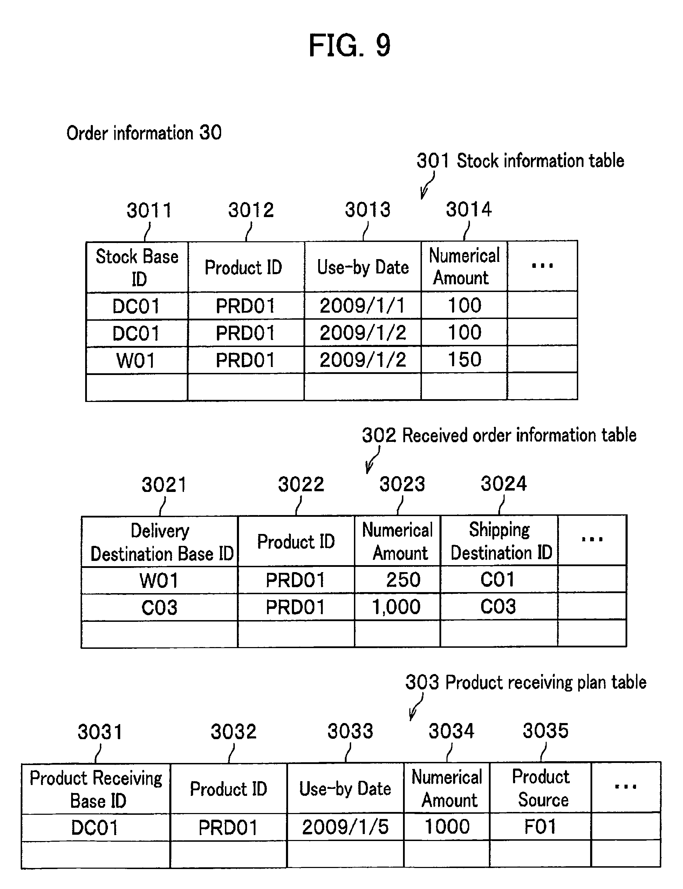

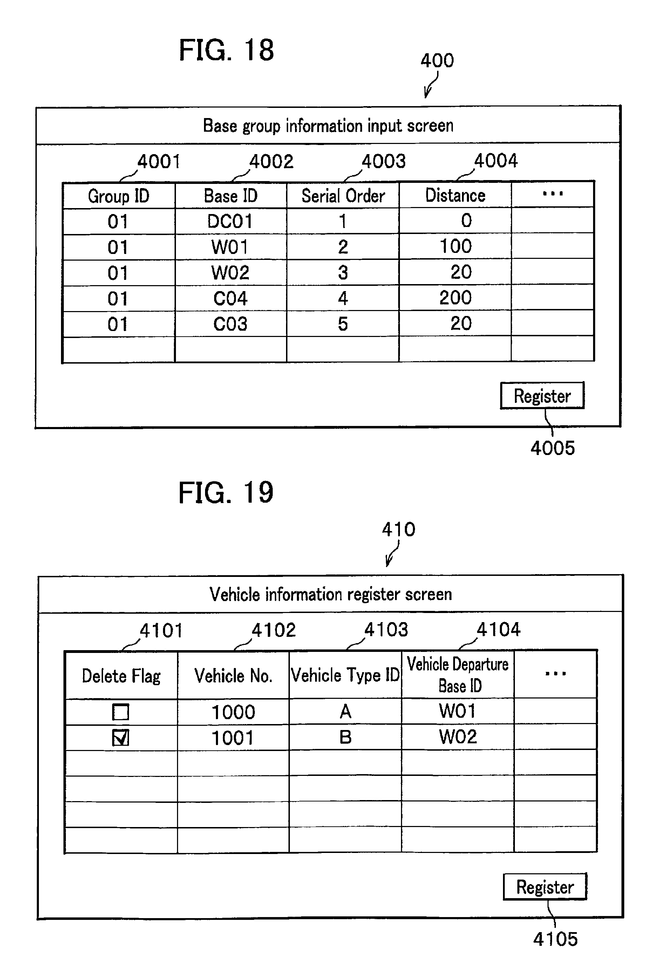

Next is described in detail a transportation schedule creation method in the transportation schedule planning support system S according to flowcharts of FIG. 4 to FIG. 8, with reference to tables and data configuration examples shown in FIG. 9 to FIG. 17 and screen configuration examples shown in FIG 18 to FIG. 24. FIG. 4 is a flowchart illustrating an flow of an entire processing of a transportation schedule creation method. FIG. 5 to FIG. 8 are flowcharts each illustrating part of the processing of FIG. 4 in detail.

Next is described the entire flow of the processing with reference to FIG. 4. Upon a start-up of the system S, in step 101, order information, master information, restriction information, or the like required for planning a transportation schedule is inputted. In step 102, a necessary amount is determined according to a delivery destination base, a type of a product, and a use-by date. In step 103, a suppliable amount is determined according to a base, a type of a product, and a use-by date. In step 104, various restriction conditions concerning an allocatable vehicle according to a base, an allocatable vehicle type according to a base group, a maximum load capacity according to a vehicle, or the like are created. In step 105, an objective function for evaluating a solution is created. In step 106, a transportation schedule is created using an optimization calculation. In step 107, the created transportation schedule is outputted. In step 108, a user checks contents of the outputted transportation schedule and determines whether or not the outputted transportation schedule requires an addition or a revision of a data. In step 109, if the transportation schedule requires the addition or revision, the transportation schedule is additionally registered or revised. If the transportation schedule does not require any addition or revision, the processing terminates.
Next are described details of the processing.

In step 101, inputs of the order information, master information, restriction information, or the like are performed by the respective parts 20 to 25 described above of the input unit 2 (see FIG. 1). Various information necessary for planning a transportation schedule is stored in the data storage unit 3.

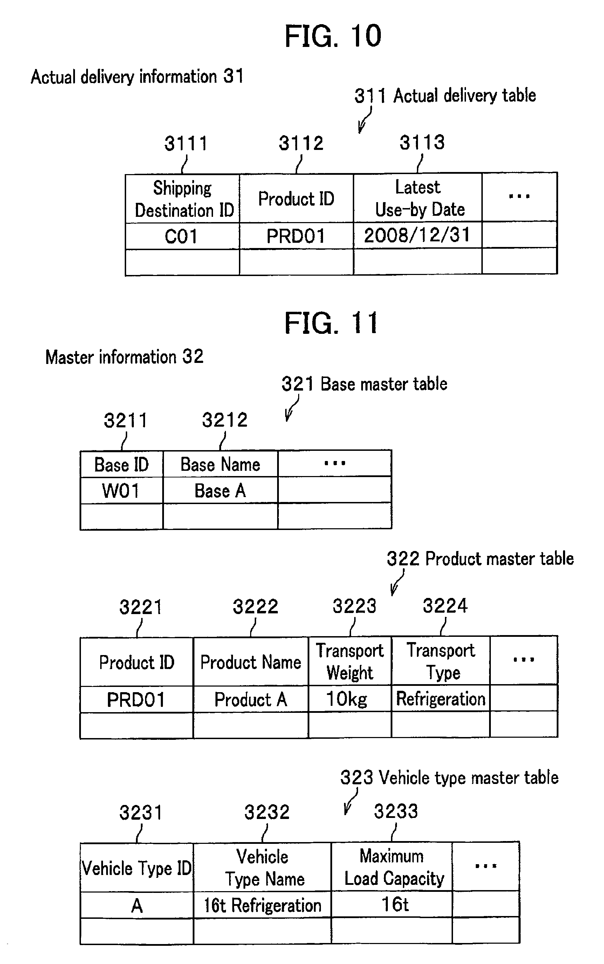

The order information input part 20 reads records of four types, namely, on stock information, received order information, a product receiving plan, and an actual delivery, from a given order information file not shown, and stores the read records in respective tables constituting the order information 30 and the actual delivery information 31 shown in FIG. 9 and FIG. 10, respectively.

The stock information record includes a base ID, a product ID, and a stock amount according to a use-by date. Data such as a stock base ID, a product ID, a use-by date, a numerical amount, and the like are registered in each row of the stock information record in this order. The above data read from the file are stored in a stock base ID column 3011, a product ID column 3012, a use-by date column 3013, a numerical amount column 3014, and the like of the stock information table 301, respectively.

The received order record includes a received order amount according to a delivery destination base ID, a product ID, and a shipping destination ID. Data such as a delivery destination base ID, a product ID, a numerical amount, a shipping destination ID, and the like are registered in each row of the received order record in this order. The above data read from the file are stored in a delivery destination base ID column 3021, a product ID column 3022, a numerical amount column 3023, a shipping destination ID column 3024, and the like, respectively. Note that, if the shipping destination C is located within the transportation schedule target area 71 (see FIG. 2), the delivery destination base ID is identical with the shipping destination ID.

The product receiving plan record includes a product receiving base ID, a product ID, a use-by date, and a product receiving planned amount according to a production source (the production base F). Data such as a product receiving base ID, a product ID, a use-by date, a product receiving planned numerical amount, a production source, and the like are registered in each row of the product receiving record in this order. The above data read from the file are sequentially stored in a product receiving base ID column 3031, a product ID column 3032, a use-by date column 3033, a numerical amount column 3034, a production source column 3035, and the like, of the product receiving plan table 303, respectively.

The actual delivery record includes an actual delivery as of the latest use-by date according to a shipping destination ID and a product ID. Data such as a shipping destination ID, a product ID, a latest use-by date, and the like are registered in each row of the actual delivery record in this order. The above data read from the file are sequentially stored in a shipping destination ID column 3111, a product ID column 3112, a latest use-by date column 3113, and the like, respectively.

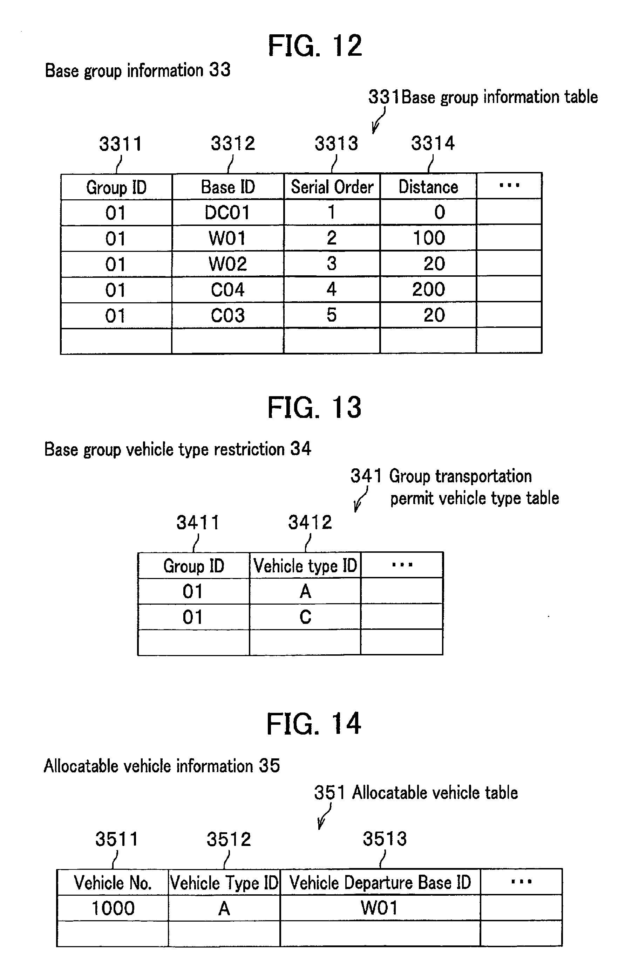

The master file part 21 reads records of two types, namely, a base master and a product master from a base master file and a product master file both not shown, respectively. The master file part 21 stores the read records in the base master table 321 and the product master table 322 both constituting the master information 32 shown in FIG. 11. The master file part 21 also stores a data in a vehicle type master and base group information inputted on an appropriate screen, in the vehicle type master table 323 of FIG. 11 and a base group information table 331 of FIG. 12, respectively.

The base master record represents information on a base as a target. Data such as a base ID, a base name, and the like are registered in each row of the base master record in this order. The above data read from the file are sequentially stored in a base ID column 3211, a base name column 3212, and the like, of the base master table 321, respectively.

The product master record represents information on a product targeted for a transportation. Data such as a product ID, a product name, a transportation weight, transportation type, and the like are registered in each row of the product master record. The above data read from the file are stored in a product ID column 3221, a product name column 3222, a transportation weight column 3223, a transportation type column 3224, and the like, of the product master table 322, respectively.

A vehicle type master register screen, not shown, on which information on a vehicle type used for a transportation is inputted for registration has input columns such as a vehicle type ID, a vehicle type name, a maximum load capacity, and the like. Upon inputting such data and pressing a register button, the data inputted in each of the columns are registered in a vehicle type ID column 3231, a vehicle type name column 3232, a maximum load capacity column 3233, and the like of the vehicle type master table 323, respectively.

As shown in FIG 18, a base group information input screen 400 on which a base group as a transportation route is inputted for registration has input columns such as a group ID column 4001, a base ID column 4002, a serial order column 4003, a distance column 4004, and the like. Upon pressing a register button 4005, the data inputted in each of the columns are stored in a group ID column 3311, a base ID column 3312, a serial order column 3313, a distance column 3314, and the like, of the base group information table 331, respectively. In the serial order column 4003, a serial number is given starting from 1 (one) as a departure base, and afterwards, in an order of a visited base. In the distance column 4004, a distance from a previously-visited base to a base of interest is inputted.

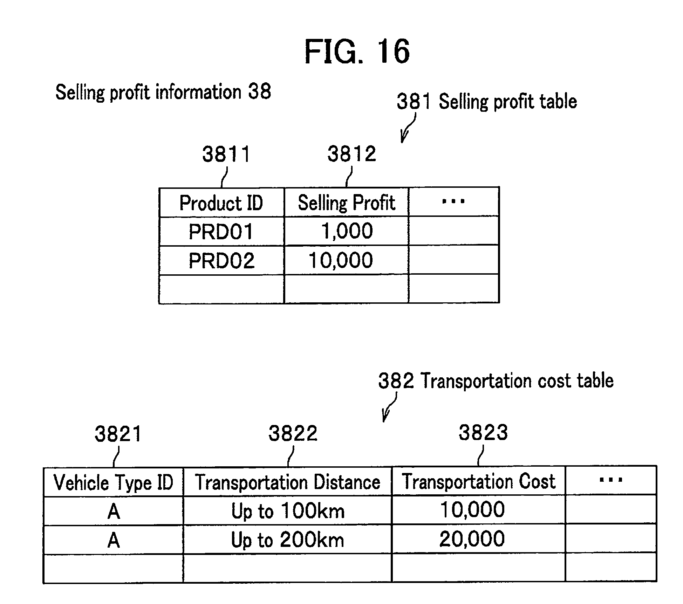

The cost information input part 22 stores a data inputted from a screen, in an allocatable vehicle table 351 shown in FIG. 14, and the selling profit table 381 and the transportation cost table 382 both shown in FIG. 16.

As shown in FIG. 19, a vehicle information register screen 410 on which information on an allocatable vehicle is inputted for registration has input columns such as a vehicle No. column 4102, a vehicle type ID column 4103, a departure base ID column 4104, and the like. Upon pressing a register button 4105, the above data inputted in each of the columns are stored in a vehicle No. column 3511, a vehicle type ID column 3512, a departure base ID column 3513, and the like, of the allocatable vehicle table 351, respectively. Herein, a record having a vehicle No. with a delete flag column 4101 with a check mark is deleted from the allocatable vehicle table 351.

A selling profit information register screen not shown on which an expected selling profit per unit of a product obtained by delivering the product is inputted for registration has input columns such as a product ID column, a selling profit column, and the like. Upon pressing a register button, the above data inputted in each of the columns are stored in a product ID column 3811, a selling profit column 3812, and the like, of the selling profit table 381, respectively. A transportation cost information register screen not shown on which transportation costs for each vehicle type ID and a transportation distance are registered has input column such as a vehicle type ID, a transportation distance, a transportation cost, and the like. Upon pressing a register button, the above data inputted in each of the columns are registered in a vehicle type ID column 3821, a transportation distance column 3822, a transportation cost column 3823, and the like, of the transportation cost table 382, respectively.

The restriction information input part 23 stores a data inputted from a screen, in the group transportation permit vehicle type table 341 of FIG. 13.

A group transportation permit vehicle type register screen, not shown, on which a vehicle type permitted to be used is inputted for registration according to a base group has input columns such as a group ID column, a vehicle type ID column, and the like. Upon pressing a register button on the screen, the above data inputted in each of the columns are stored in a group ID column 3411, a vehicle type ID column 3412, and the like, of the group transportation permit vehicle type table 341, respectively.

Next is described a processing of determining a necessary amount according to a delivery destination base, a type of a product, and a use-by date in step 102 of FIG. 4, with reference to FIG. 5, which is a flowchart showing details of the processing.

In step 201, a product receiving plan numerical amount registered in the product receiving plan table 303 of FIG. 9 is added to a numerical amount in stock in a corresponding base in the stock information table 301. More specifically, records in the product receiving plan table 303 are read one by one so as to retrieve a stock information record having the product receiving base ID column 3031, the product ID column 3032, and the use-by date column 3033 all of which are identical with those of the read product receiving plan record, from the stock information table 301. If the identical record is retrieved, a value of the numerical amount column 3034 representing a product receiving plan numerical amount is added into the numerical amount column 3014. If the identical record is not retrieved, a new stock information record is created to have a data in the product receiving base ID column 3031, in the stock base ID column 3011; a data in the product ID column 3032, in the product ID column 3012; a data in the use-by date column 3033, in the use-by date column 3013; and a data in the numerical amount column 3034, in the numerical amount column 3014. The created record is added to the stock information table 301 and is stored therein.

A series of steps from step 202 to step 204 are performed for all received order information records stored in the received order information table 302 of FIG. 9.

In step 202, a received order information record is read out from the received order information table 302. A delivery destination base ID (for example, "WO1") is obtained from the delivery destination base ID column 3021; a product ID (for example, "PRD01"), from the product ID column 3022; a numerical amount of a received order (for example, "250"), from the numerical amount column 3023; and a shipping destination ID (for example, "CO1"), from the shipping destination ID column 3024.

In step 203, a use-by date required for a product to be delivered is determined corresponding to the received order information, based on an actual delivery with respect to the obtained shipping destination ID. More specifically, a record having an identical shipping destination ID and an identical product ID with those obtained in the shipping destination ID column 3111 and the product ID column 3112 is retrieved from the actual delivery table 311 of FIG. 10. The latest use-by date (for example, "2008/12/31") of the product already having been delivered is obtained from the use-by date column 3113 of the retrieved record, to thereby determine a necessary use-by date (for example, "on and after 2009/1/1").

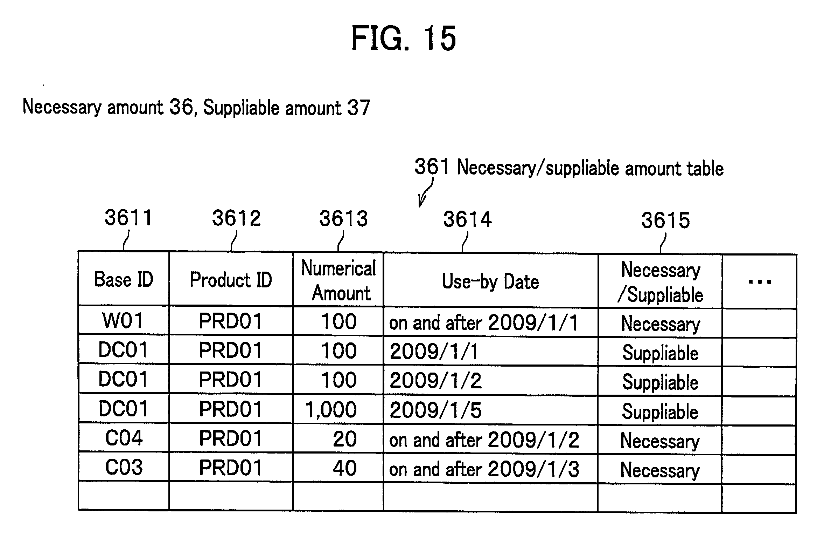

In step 204, if there is a stock corresponding to the determined use-by date at a designated delivery destination base, the stock is supplied. If the stock runs short, a numerical amount corresponding to the shortage is registered as a necessary amount at the base, in the necessary/suppliable amount table 361 of FIG. 15. More specifically, all records having an identical delivery destination base ID in the stock base ID column 3011 and an identical product ID in the product ID column 3012 with those (for example, "W01" and "PRD01", respectively) obtained as above and also having a use-by date corresponding to that (for example, on and after "2009/1/1") determined with the use-by date column 3013 are retrieved from the stock information table 301. Values in the numerical amount columns 3014 of all of the retrieved records are summed up to thereby calculate a stock numerical amount, which can be supplied from the delivery destination base. If the suppliable stock numerical amount at the delivery destination base is more than a numerical amount ordered, the numerical amount ordered is subtracted from the stock numerical amount at the delivery destination base in the stock information table 301, in the order of use-by date from the oldest.

If the suppliable stock numerical amount (for example, "150") at the delivery destination base is less than the numerical amount ordered (for example, "250"), the stock numerical amount of the product at the delivery destination base in the stock information table 301 is reduced to zero. This means that all of the suppliable stock is supplied. Then, a numerical amount of the shortage (for example, "100") is calculated. The calculated deficient numerical amount is registered as a necessary amount at the base, in the necessary/suppliable amount table 361. Note that, in a case where the delivery destination base is also the shipping destination C, such a stock supply is omitted because the shipping destination C has no stock. The numerical amount ordered itself is thus taken as a deficient numerical amount (that is, a necessary amount).

A necessary amount is registered in the necessary/suppliable amount table 361 as follows. The deficient numerical amount calculated as above is written in the numerical amount column 3613. A record is created having a necessary/suppliable column 3615 with "necessary", an appropriate base ID, an appropriate product ID, and an appropriate use-by date. The created record is stored in the necessary/suppliable amount table 361.

A series of steps from step 201 to step 204 is performed by the necessary amount calculation part 40 of the data processing unit 4.

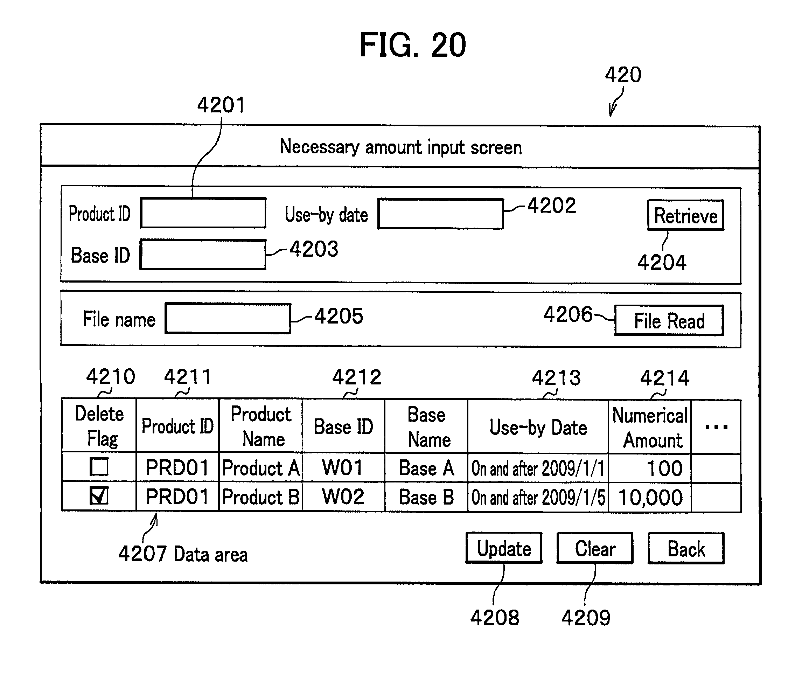

After the steps described above are performed for all records in the received order information table 302, in step 205, all of the necessary amounts registered in the necessary/suppliable amount table 361 are displayed. More specifically, the necessary amount output part 51 (see FIG. 1) makes the output device 6 display a necessary amount input screen 420 as shown in FIG. 20.

A condition for narrowing down a data to be displayed in the data area 4207 is inputted in a product ID input column 4201, a use-by date input column 4202, or a base ID input column 4203. If a retrieve button 4204 is pressed without any input in the columns 4201 to 4203, all records having the necessary/suppliable column 3615 with "necessary" and stored in the necessary/suppliable amount table 361 are displayed in the data area 4207. If a condition is inputted in any of the columns 4201 to 4203, only a record which meets the condition is displayed in the data area 4207.

In step 206, a user checks the necessary amount input screen 420 and determines whether or not a necessary amount of interest is required to be added or revised. If the necessary amount of interest is required to be added or revised, the processing advances to step 207, in which the necessary amount is added or revised from the input device 1. If the necessary amount is not required to be added or revised, the processing terminates.

In step 207, the necessary amount input part 24 (see FIG. 1) of the input device 1 adds or revises a data on the necessary amount. At this time, the data area 4207 of the necessary amount input screen 420 displays a record having a data on the necessary amount stored in the necessary/suppliable amount table 361 (that is, a record having the necessary/suppliable column 3615 with "necessary".

If the data is to be revised, the data with a necessary revision is inputted in at least one of a product ID column 4211, a base ID column 4212, a use-by date column 4213, and a numerical amount column 4214. Upon pressing an update button 4208, the inputted data is stored in a corresponding record in the necessary/suppliable amount table 361. If a necessary amount displayed in the data area 4207 is to be deleted, a check mark is put in a delete flag 4210. Upon pressing an update button 4208, a corresponding record is deleted from the necessary/suppliable amount table 361.

If a necessary amount is to be additionally registered, a clear button 4209 is first pressed so as to clear the data area 4207 without any data in the columns. Then, a data to be added is inputted in the product ID column 4211, the base ID column 4212, the use-by date column 4213, and the numerical amount column 4214. Upon pressing an update button 4208, a record having the necessary amount is created from the data inputted in the columns 4211 to 4244 and is stored in the necessary/suppliable amount table 361. If a file name is inputted in a file name column 4205, and a file read button 4206 is pressed, a product ID, a base ID, a use-by date, and a numerical amount stored in the specified file are reflected in the product ID column 4211, the base ID column 4212, the use-by date column 4213, and the numerical amount column 4214, in the data area 4207, respectively. Further, upon pressing the update button 4208, a new record having the reflected data in the columns 4211 to 4214 are similarly registered in the necessary/suppliable amount table 361.

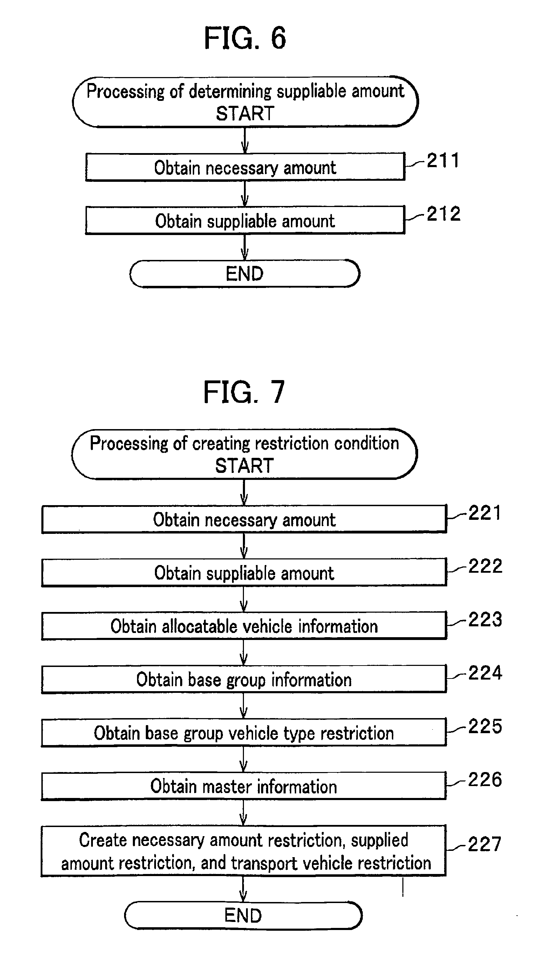

Next is described in detail a processing of determining a suppliable amount according to a delivery destination base, a type of a product, and a use-by date performed in step 103 of FIG. 4, with reference to a flowchart of FIG. 6.

In step 211, a record having a necessary amount (that is, having the necessary/suppliable column 3615 with "necessary") is read from the necessary/suppliable amount table 361 of FIG. 15. From the read record, a product ID (for example, "PRD01") in the product ID column 3612 and a use-by date (for example, "on and after 2009/1/1") in the use-by date column 3614 are obtained.

In step 212, all of records each having an identical product ID with the obtained product ID (for example, "PRD01") in the product ID column 3012 and a corresponding use-by date to the use-by date (for example, "on and after 2009/1/1") in the use-by date column 3013 are retrieved from the stock information table 301. A total of stock numerical amounts in all of the retrieved records are registered as a suppliable amount in the necessary/suppliable amount table 361. More specifically, a stock numerical amount in the numerical amount column 3014 of the stock information table 301 is written in the numerical amount column 3613. A new record is then created having the necessary/suppliable column 3615 with "suppliable", the base ID, the product ID, and the use-by date. The created record is registered and stored in the necessary/suppliable amount table 361. At this time, the record having the stock information in which the stock numerical amount has been registered as the suppliable amount is deleted from the stock information table 301. This can prevent the same stock from being registered doubly as suppliable, if other base also registers a necessary amount of the same product.

A series of steps from step 211 to step 212 is performed by the suppliable amount calculation part 41 of the data processing unit 4.

Next is described in detail a processing of creating a restriction condition in step 104 of FIG. 4, with reference to a flowchart of FIG. 7.

In step 221 and step 222, the necessary amount 36 and the suppliable amount 37 (see FIG. 15) respectively determined in step 102 and step 103 of FIG. 4 are obtained, respectively. In step 223, the allocatable vehicle information 35 (see FIG. 14) is obtained. In step 224, the base group information 33 (see FIG. 12) is obtained. In step 225, the base group vehicle type restriction 34 (FIG. 13) is obtained. In step 226, the master information 32 (FIG. 11) is obtained. And, in step 227, three restriction conditions, namely, a necessary amount restriction, a supplied amount restriction, and a transportation vehicle restriction are created.

In step 227, necessary amount restrictions according to a base ID, a product ID, a use-by date are created for all records each having the necessary/suppliable column 3615 with "necessary" in the necessary/suppliable amount table 361, as follows:
Necessary amount at receiving base ≥ Total transportation amount to receiving base

The necessary amount restriction means that "a product is not delivered in an amount more than a necessary amount at each base". A necessary amount registered in the numerical amount column 3613 of a record of interest at a receiving base is set as the necessary amount at the receiving base. A transportation amount to the receiving base is expressed using a variable computed with an optimization processing to be described later.

Suppliable amount restrictions according to a base ID, a product ID, and a use-by date are created for all records each having the necessary/suppliable column 3615 with "suppliable" in the necessary/suppliable amount table 361, as follows:
Suppliable amount at sending base ≥ Total transportation amount from sending base

The suppliable amount restriction means that "a product is not sent in an amount more than a suppliable amount at each base". A suppliable amount registered in the numerical amount column 3613 of a record of interest at a delivery base is set as a suppliable amount at the delivering base. A transportation amount of a product transported from a sending base is expressed using a variable computed with the optimization processing to be described later.

The transportation vehicle restriction is created by referencing the group transportation permit vehicle type table 341 and the allocatable vehicle table 351, as follows:
Number of vehicles with vehicle type not available at base group = 0
Number of vehicles used at vehicle departure base according to vehicle type ≤ number of vehicles allocatable at vehicle departure base according to vehicle type
Transportation amount between bases in base group ≤ Total load capacity of all vehicles used in base group

The vehicle type not available in a base group is obtained by retrieving a vehicle type other than an available vehicle type in each base group registered in the group transportation permit vehicle type table 341, from the vehicle type master 323. The number of vehicles allocatable at a vehicle departure base according to a vehicle type is obtained by counting a vehicle registered in the allocatable vehicle table 351 according to a departure base ID and a vehicle type. The number of vehicles used at a vehicle departure base according to a vehicle type, the transportation amount between bases in a base group, and the total load capacity of all vehicles used in the base group are expressed using a variable with the optimization processing to be described later.

A series of steps from step 221 to step 227 is carried out by the restriction condition creation part 42 of the data processing unit 4.

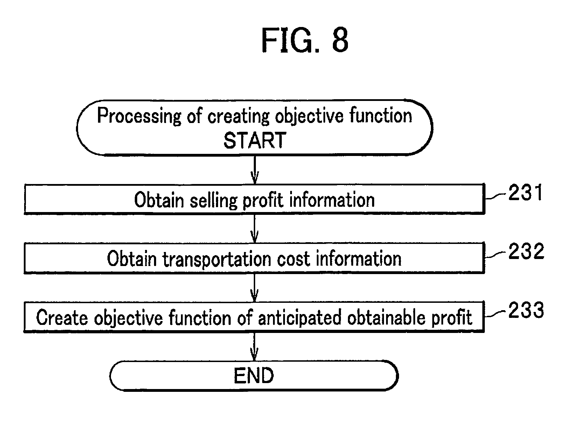

Next is described in detail a processing of creating an objective function in step 105 of FIG. 4, with reference to a flowchart of FIG. 8.

In step 231, selling profit information is obtained from the selling profit table 381 of the expected obtainable profit information 38 (see FIG. 16). In step 232, transportation cost information is obtained from the transportation cost table 382.

In step 233, an objective function of an expected obtainable profit is created so as to evaluate a solution determined by an optimization processing, as follows:
Expected obtainable profit = Selling profit obtained by transporting all products - transportation cost of all vehicles

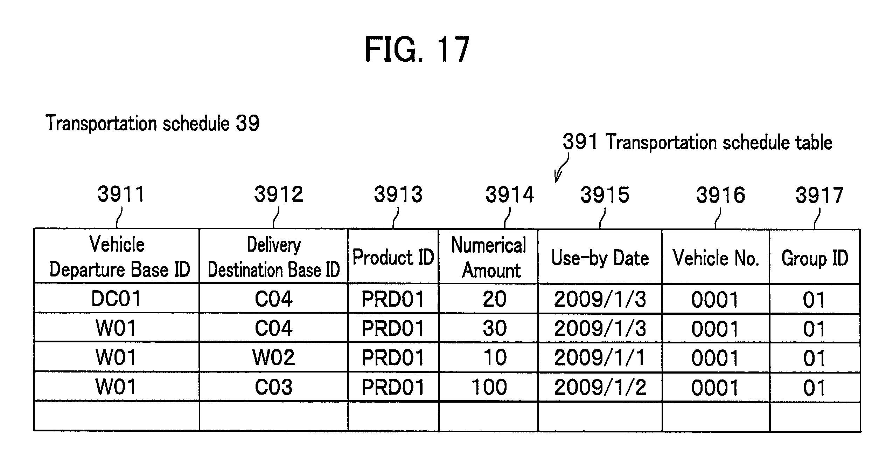

A transportation schedule planned using the optimization processing to be described later is created as a collection of records including a departure base ID, a delivery destination base ID, a product ID, a numerical amount, a use-by date, a vehicle No., and a group ID (see FIG. 17). After the transportation schedule is planned, an appropriate value is put into the objective function described above, to thereby compute and evaluate the expected obtainable profit.

The selling profit obtained by transporting all products is calculated as follows. With respect to each record constituting the transportation schedule, a selling profit per product corresponding to a product ID obtained by referencing the selling profit table 381 is multiplied by the numerical amount of the corresponding record. The multiplied values of all the records are summed up to obtain the selling profit. The transportation cost of all vehicles is calculated as follows. With respect to each vehicle allocated to a given base group, the base group information table 331 is referenced to obtain a transportation distance between bases corresponding to a transportation route of the base group. The cost table 382 is referenced to obtain a transportation cost of a corresponding vehicle type according to a transportation distance, which are summed up, to thereby calculate a transportation cost per vehicle. The calculated costs of all of the vehicles allocated to the base group are summed up to obtain the transportation cost of all vehicles.

A series of those steps from step 231 to step 233 is carried out by the objective function creation part 43 of the data processing unit 4.

In step 106 of FIG. 4, an optimization calculation for solving a mixed linear programming problem is performed using the restriction conditions and the objective function created in step 104 and step 105, respectively. A transportation schedule is thus created and stored in the transportation schedule table 391 of FIG. 17. The transportation schedule creation part 44 of the data processing unit 4 carries out step 106.

The transportation schedule table 391 includes a vehicle departure base ID column 3911, a vehicle arrival base ID column 3912, a product ID column 3913, a numerical amount column 3914, a use-by date column 3915, a vehicle No. column 3916, and a group ID column 3917. Each row represents a transportation numerical amount and a transportation route according to a vehicle departure base, a vehicle arrival base, a type of a product, a use-by date, and a vehicle No. In the transportation schedule table 391, records are stored in an order of visited bases on a transportation route of each vehicle.

For example, data in FIG. 17 shows that a vehicle having a vehicle No. of "0001" performs a transportation on a transportation route corresponding to a group ID of "01". The vehicle is loaded with 20 units of products "PRD01" destined for a base "CO4", at a base "DCO1". The vehicle travels to a base "WO1" and is loaded with 30 units of the same products destined for the base "CO4", 10 units of products destined for a base "WO2", and 100 units of products destined for a base "CO3". If the vehicle arrives at a delivery destination base indicated by a delivery destination base ID, a product having the identical delivery destination base ID is unloaded from the vehicle. If the vehicle continues to perform another transportation, a set of records for the next transportation route is to be stored.

In step 107, the transportation schedule created in step 106 is outputted to the output device 6. The output is carried out by the schedule output part 50 (see FIG. 1) of the output unit 5. In this step, how the transportation schedule is outputted or an output layout can be selected.

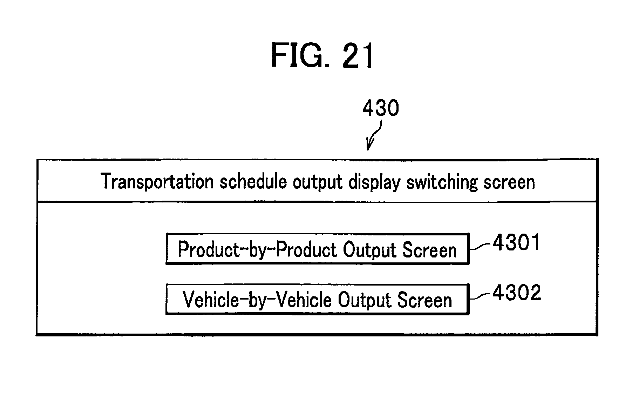

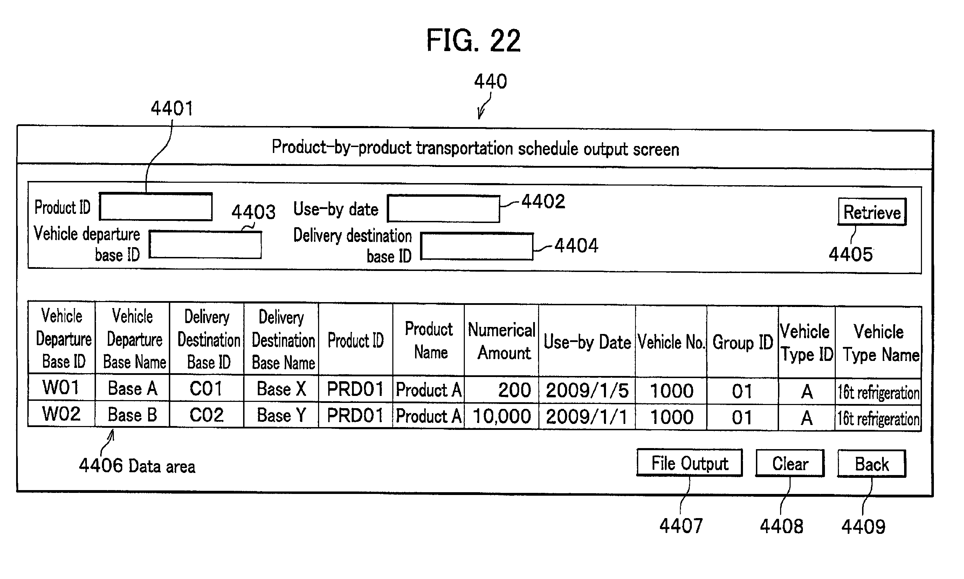

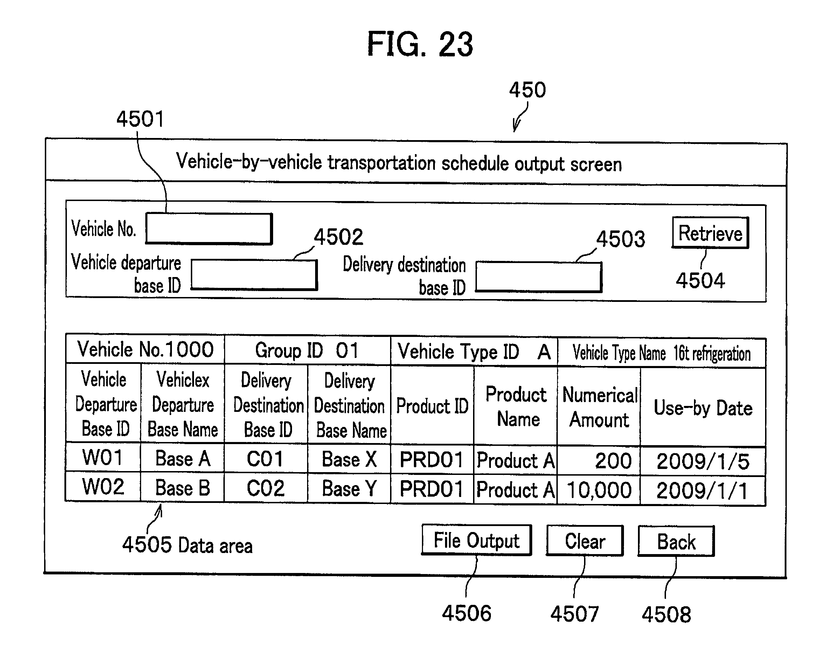

In order for a user to select how the transportation schedule is displayed, a transportation schedule output display switching screen 430 of FIG. 21 is displayed. If a product-by-product output screen button 4301 is pressed, a product-by-product transportation schedule output screen 440 of FIG. 22 is displayed. Alternatively, if a vehicle-by-vehicle output button 4302 is pressed, a vehicle-by-vehicle transportation schedule output screen 450 of FIG. 23 is displayed.

The product-by-product transportation schedule output screen 440 displays thereon a transportation schedule on a product-by-product basis. A condition for narrowing down a data to be displayed in a data area 4406 is inputted in input columns 4401 to 4404. If a retrieval condition is inputted in any of the columns 4401 to 4404 and a retrieve button 4405 is pressed, only a record which meets the condition and stored in the transportation schedule table 391 (FIG. 17) is retrieved and displayed in the data area 4406. Note that FIG. 22 is a display example assuming that a data different from that of the transportation schedule shown in FIG. 17 is retrieved. FIG. 22 also displays relevant character information.

If a file output button 4407 is pressed, the data displayed in the data area 4406 can be outputted as a file in the client 81. If a clear button 4408 is pressed, data displayed in the data area 4406 is cleared. If a back button 4409 is pressed, the product-by-product transportation schedule output screen 440 goes back to the transportation schedule output display switching screen 430.

The vehicle-by-vehicle transportation schedule output screen 450 displays thereon a transportation schedule on a vehicle-by-vehicle basis. A retrieval condition for narrowing down a data to be displayed in a data area 4505 is inputted into any of input columns 4501 to 4503. If a retrieval condition is inputted in any of the columns 4501 to 4503 and a retrieve button 4504 is pressed, records stored in the transportation schedule table 391 (see FIG. 17) are retrieved, and only a record which meets the condition is displayed in the data area 4505. Note that FIG. 23 is a display example assuming that the same record as that displayed in FIG. 22 is displayed.

The data outputted in the data area 4505 can be outputted as a file in the client 81, if a file output button 4506 is pressed. If a clear button 4507 is pressed, the data displayed in the data area 4505 is cleared. If a back button 4508 is pressed, the vehicle-by-vehicle transportation schedule output screen 450 goes back to the transportation schedule output display switching screen 430.

In step 108, a user is requested to determine whether or not a result outputted in step 107 requires a revision. If the revision is required, the processing advances to step 109, where the transportation schedule is revised. If the revision is not required, the processing terminates.

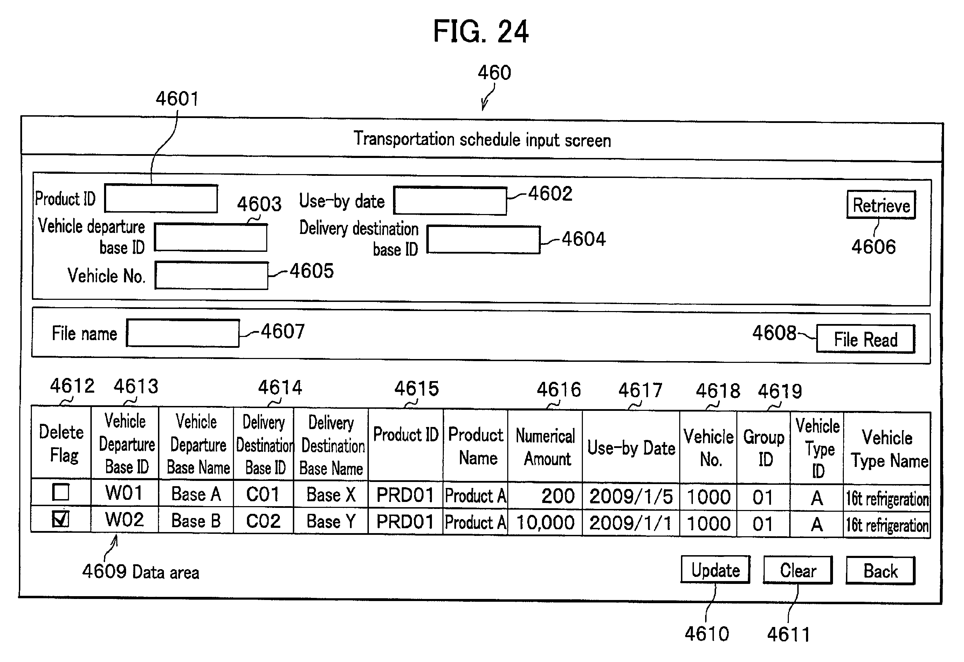

In step 109, the transportation schedule change part 25 (see FIG. 1) registers or revises necessary data of the transportation schedule, using the input device 1. At this time, a transportation schedule input screen 460 is displayed. As shown in FIG. 24, similarly to the product-by-product transportation schedule output screen 440, the transportation schedule input screen 460 displays a transportation schedule according to a product. A retrieval condition for narrowing down a data to be displayed in a data area 4609 is inputted into any of input columns 4601 to 4605. If a retrieval condition is inputted in any of the columns 4601 to 4605 and a retrieve button 4606 is pressed, records stored in the transportation schedule table 391 (see FIG. 17) are retrieved, and only a record which meets the condition is displayed in the data area 4609.

At a default state of the transportation schedule input screen 460, each column in the data area 4609 is blank. If a new transportation schedule is additionally registered, appropriate data are inputted in a departure base ID column 4613, a delivery destination base ID column 4614, a product ID column 4615, a numerical amount column 4616, a use-by date column 4617, a vehicle No. column 4618, and a group ID column 4619. An update button 4610 is pressed. A new record is thus registered, in which the inputted data are stored in the vehicle departure base ID column 3911, the delivery destination base ID column 3912, the product ID column 3913, the numerical amount column 3914, the use-by date column 3915, the vehicle No. column 3916, and the group ID column 3917, respectively, in the transportation schedule table 391.

A new record can also be registered by inputting a file name into the file name input area 4607 and pressing a file read button 4608. Data of a departure base ID, a delivery destination base ID, a product ID, a numerical amount, a use-by date, a vehicle No., and a group ID are read from a file specified by the file name. The read data are reflected in the departure base ID column 4613, the delivery destination base ID column 4614, the product ID column 4615, the numerical amount column 4616, the use-by date column 4617, the vehicle No. column 4618, and the group ID column 4619, respectively, in the data area 4609. Upon pressing an update button 4610, a new record is registered in which the above data are stored in corresponding columns in the transportation schedule table 391.

In revising a transportation schedule, a retrieval condition is inputted in any of the retrieval condition input columns 4601 to 4605. And a retrieve button 4606 is pressed, to thereby display a record retrieved from the transportation schedule table 391, in the data area 4609. Note that FIG. 24 is a display example assuming that the same record as that displayed in FIG. 22 and FIG. 23 (that is, different from that of the transportation schedule shown in FIG. 17) is retrieved.

The record displayed in the data area 4609 is revised by inputting a revised data in at least one of the departure base ID column 4613 to group ID column 4619 and pressing an update button 4610. The revised data is reflected in the transportation schedule table 391. If a check mark is put in a delete flag 4612 and the update button 4610 is pressed, a record displayed in the data area 4609 is deleted from the transportation schedule table 391. If a clear button 4611 is pressed, the data area 4609 returns to default.

The method of creating a transportation schedule has been explained as aforementioned.

In the present invention, as described above, an optimization problem for maximizing an expected profit from a transportation is solved in planning a transportation schedule of a product requiring a use-by date control, while taking into account a transportation efficiency such as a travel of a plurality of bases and a consolidated loading of products, and a restriction such as a vehicle type permitted to enter a specific base. This can lead an inactive stock to an active one without waste, which is also effective for stock reduction.

The present invention can support planning of a further efficient transportation schedule, while a use-by date of each product according to a delivery destination as well as a restriction on a transportation according to a base are taken into account.

In the present invention, a base group is introduced. This allows a flexible response even if a base or an area covered by a base group is changed. Further, the present invention has a configuration in which a use can make such a change. This can support a transportation schedule planning even in an exceptional case which is not suitable to an ordinary procedure.

### (5) Data Configuration

Next are described tables constituting various information (see FIG. 1) stored in the data storage unit 3 and examples of data configurations of the tables, with reference to FIG. 9 to FIG. 17.

FIG. 9 shows an example of data configurations of the stock information table 301, the received order information table 302, and the product receiving plan table 303, constituting the order information 30. The stock information table 301 includes the stock base ID column 3011, the product ID column 3012, the use-by date column 3013, the numerical amount column 3014, and the like. The received order information table 302 includes the delivery destination base ID column 3021, the product ID column 3022, the numerical amount column 3023, the shipping destination ID column 3024, and the like. The product receiving plan table 303 includes the product receiving base ID column 3031, the product ID column 3032, the use-by date column 3033, the numerical amount column 3034, the product source column 3035, and the like.

FIG. 10 shows an example of a data configuration of the actual delivery table 311 constituting the actual delivery information 31. The actual delivery table 311 includes the shipping destination ID column 3111, the product ID column 3112, the latest use-by date column 3113, and the like. The actual delivery table 311 is used for obtaining the latest use-by date according to a delivery destination and a type of a product.

FIG. 11 shows an example of data configurations of the base master table 321, the product master table 322, and the vehicle type master table 323, constituting the master information 32. The base master table 321 includes the base ID column 3211, the base name column 3212, and the like. The product master table 322 includes the product ID column 3221, the product name column 3222, the transportation weight column 3223, the transportation type column 3224, and the like. The vehicle type master table 323 includes the vehicle type ID column 3231, the vehicle type name column 3232, the maximum load capacity column 3233, and the like.

FIG. 12 shows an example of a data configuration of the base group information table 331 constituting the base group information 33. The base group information table 331 includes the group ID column 3311, the base ID column 3312, the serial order column 3313, the distance column 3314, and the like and defines a transportation route. In the group ID column 3311, a group ID which is an identification number for identifying a base group is registered. Of all bases having the same group ID, a base having the serial order column 3313 of 1 (one) is a vehicle departure base. A base having the serial order column 3313 of the largest value is a final destination base. In the distance column 3314, a distance from a previously-visited base to a base of interest is registered.

FIG. 13 shows an example of a data configuration of the group transportation permit vehicle type table 341 constituting the base group vehicle type restriction 34. The group transportation permit vehicle type table 341 includes the group ID column 3411, the vehicle type ID column 3412, and the like. All available vehicle types according to a base group are registered in the group transportation permit vehicle type table 341.

FIG. 14 shows an example of a data configuration of the allocatable vehicle table 351 constituting the allocatable vehicle information 35. The allocatable vehicle table 351 includes the vehicle No. column 3511, the vehicle type ID column 3512, the departure base ID column 3513, and the like. All allocatable vehicles according to a vehicle departure base are registered in the allocatable vehicle table 351.

FIG. 15 shows an example of a data configuration of the necessary/suppliable amount table 361 constituting the necessary amount 36 and the suppliable amount 37. The necessary/suppliable amount table 361 includes the base ID column 3611, the product ID column 3612, the numerical amount column 3613, the use-by date column 3614, the necessary/suppliable column 3615, and the like. The necessary/suppliable column 3615 represents a product of interest is necessary or suppliable at a base of interest.

FIG. 16 shows an example of data configurations of the selling profit table 381 and the transportation cost table 382 constituting the expected obtainable profit information 38. The selling profit table 381 includes a product ID column 3811, a selling profit column 3812, and the like. A selling profit per product is registered in the selling profit table 381. The transportation cost table 382 includes the vehicle type ID column 3821, the transportation distance column 3822, the transportation cost column 3823, and the like. A transportation cost according to a transportation distance for each vehicle type is registered in the transportation cost table 382.

FIG. 17 shows an example of a data configuration of the transportation schedule table 391 constituting the transportation schedule 39. The transportation schedule table 391 includes the vehicle departure base ID column 3911, the delivery destination base ID column 3912, the product ID column 3913, the numerical amount column 3914, the use-by date column 3915, the vehicle No. column 3916, the group ID column 3917, and the like. A transportation schedule created by using an optimization calculation is registered in the transportation schedule table 391.

The embodiment according to the present invention has been explained as aforementioned. However, the embodiment of the present invention is not limited to those explanations, and those skilled in the art ascertain the essential characteristics of the present invention and can make the various modifications and variations to the present invention to adapt it to various usages and conditions without departing from the spirit and scope of the claims.

## Claims

1. A transportation schedule planning support system receiving an order of one or more types of products which requires a use-by date control, and transporting the product from one or more stock-carrying bases to one or more delivery destinations, comprising:
a base group storage part that stores therein a transportation route candidate from one or more stock-carrying bases to each delivery destination adoptable as a solution, as a base group;
a necessary amount calculation part that determines a necessary use-by date for a product to be delivered next, based on an actual delivery to each delivery destination and calculates a necessary amount of the product;
a restriction condition creation part that creates a restriction condition concerning at least: a necessary amount according to a delivery destination, a type of a product, and a necessary use-by date; the number of vehicles allocatable to a transportation at each base according to a vehicle type; and a vehicle type not available in each base group;
an objective function creation part that creates an objective function for calculating an expected obtainable profit from a transportation amount of each product and from a transportation cost determined corresponding to a transportation route of each vehicle; and
a transportation schedule creation part that creates a transportation schedule using the restriction condition and the objective function with a mixed integer programming.

2. The transportation schedule planning support system according to claim 1, further comprising
a necessary amount input part that revises, deletes, or newly adds a necessary amount of a product according to a delivery destination, a type of a product, and a necessary use-by date which are calculated by the necessary amount calculation part, from a screen or a file.

3. The transportation schedule planning support system according to claim 2,
wherein the restriction condition includes: that a transportation amount of each product according to a type of the product to a delivery destination based on the created transportation schedule is not more than a necessary amount of the product according to a type of the product at the delivery destination; that a transportation amount of each product according to a type of the product from a stock-carrying base, based on the created transportation schedule is not more than a suppliable amount of each product according to a type of a product at the stock-carrying base; or that the number of vehicles according to a vehicle type allocated based on the created transportation schedule is not more than the number of vehicles according to a vehicle type allocatable at each base; and
wherein the restriction condition includes a restriction concerning a vehicle type available at each base group.

4. The transportation schedule planning support system according to claim 3,
wherein the transportation schedule created by the transportation schedule creation part can be outputted in a form selected from a form with respect to a type of a product to be transported and a form with respect to a vehicle used for a transportation.

5. The transportation schedule planning support system according to claim 4,
wherein the transportation schedule created by the transportation schedule creation part includes a type of a product to be transported, a use-by date and a numerical amount of the product, a transportation source and a transportation destination, and information on a vehicle used for the transportation,
the transportation schedule planning support system further comprises a transportation schedule revision part that additionally stores, revises, or deletes a transportation schedule from at least one of a screen and a file.

6. A transportation schedule planning support method receiving an order of one or more types of products which requires a use-by date control, and transporting the product from one or more stock-carrying bases to one or more delivery destinations, comprising:
a base group register processing in which a user previously registers a base group in a base group storage part in which a transportation route candidate from one or more stock-carrying bases to each delivery destination adoptable as a solution is stored as a base group;
a necessary amount calculation processing in which a necessary use-by date for a product to be delivered next is determined based on an actual delivery to each delivery destination, and a necessary amount of the product is calculated;
a restriction condition creation processing in which a restriction condition concerning at least: a necessary amount according to a delivery destination, a type of a product, and a necessary use-by date; the number of vehicles allocatable to a transportation at each base according to a vehicle type; and a vehicle type not available in each base group;
an objective function creation processing in which an objective function for calculating an expected obtainable profit from a transportation amount of each product and from a transportation cost determined corresponding to a transportation route of each vehicle is created; and
a transportation schedule creation processing in which a transportation schedule using the restriction condition and the objective function with a mixed integer programming is created.
